(19) Europäisches Patentamt
European Patent Office
Office européen des brevets

(11) **EP 2 441 727 A2**

(12) **EUROPEAN PATENT APPLICATION**
published in accordance with Art. 153(4) EPC

(43) Date of publication:
**18.04.2012 Bulletin 2012/16**

(51) Int Cl.:
**B66C 13/16** (2006.01)    **G01B 21/02** (2006.01)

(21) Application number: **10786307.8**

(22) Date of filing: **19.05.2010**

(86) International application number:
**PCT/KR2010/003152**

(87) International publication number:
**WO 2010/143824 (16.12.2010 Gazette 2010/50)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **09.06.2009 KR 20090050989**

(71) Applicant: **Choi, Gy-Yun**
**Incheon 407-050 (KR)**

(72) Inventor: **Choi, Gy-Yun**
**Incheon 407-050 (KR)**

(74) Representative: **Mittler, Enrico et al**
**Mittler & C. S.r.l.**
**Viale Lombardia, 20**
**20131 Milano (IT)**

(54) **HOIST LENGTH MEASURING METHOD FOR INPUT SHAPING**

(57) Disclosed is a hoist length measuring method comprising: a first step of setting a hoist length L to an initial length (L0 + L1); a second step of determining whether a preset time period has elapsed after the operation of a hoist has started; a third step of determining whether a hook is falling or rising if it is determined that the preset time period has elapsed; and a fourth step of calculating a hoist length at the time of determination using the following respective equations for a case in which the hook is falling and for a case in which the hook is rising, wherein L0 represents the distance between the center of the hook and the center of the shaft of the motor of the hoist when the hook of the hoist is located at an upper limit, and L1 represents the distance between the center of the hook and the center of an object hanging on the hook, and the equation for the case in which the hook is rising is L = L - $\Delta$L, and the equation for the case in which the hook is falling is L = L + $\Delta$L, wherein $\Delta$L represents the variation in the length of the hoist caused by the rising or falling of the hook, and is defined by a rising speed (or a falling speed) $\times$ a preset time period.

[Fig. 4]

EP 2 441 727 A2

**Description**

[Technical Field]

The present invention relates to a hoist length measuring method for input shaping.

[Background Art]

As one of vibration control methods, an input shaping control means a control which gives a vibration to an opposite phase corresponding to a vibration of an object and minimizes the vibration of the object when the object starts or suspends moving.

In connection with the foregoing control, U.S. Patents No. 4,997,095 and No.5,638,267 have been disclosed.

To apply the input shaping control to a crane, the number of inherent vibrations of a hoist which arises when the object moves is calculated to thereby generate an input shaping corresponding to an opposite phase of the number of inherent vibrations. To calculate the number of inherent vibrations, a length of the hoist should be measured in real-time.

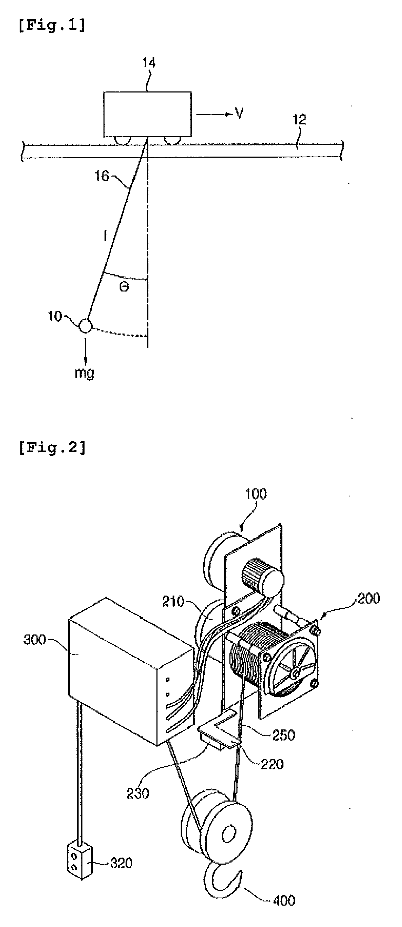

This will be described in more detail with reference to FIG 1. If a crane is explained as an example, a driving part 14 is mounted in a rail 12 installed in a ceiling of a large structure to thereby travel thereon as in FIG. 1. A hoist is installed in a lower part of the driving part 14, and includes a motor and a rope 16 which is connected to the motor and is adjustable in length. An object 10 is fixed to a lower end part of the rope 16.

In the crane, upon movement of the driving part 14, the object 10 which is fixed to the hoist moves and causes a regular vibration when starting or suspending movement. As a result, the object 10 cannot be moved in a desired path, and is hard to stop in an accurate location, and takes much time to stop completely.

If the number of inherent vibrations of the hoist is $\omega_n$, gravitational acceleration is g and the length of the hoist, i.e., the distance from the driving part 14 to the object 10 is $\ell$, the number of inherent vibrations of the hoist is

[Amendment under Article 91 of the Rule as of June 3, 2010]

$$\omega_n = \sqrt{\frac{g}{l}}$$

Accordingly, the number of inherent vibrations of the object 10 is determined by the length of the hoist $\ell$.

To calculate the length of the hoist, Korean Registered Utility Model No. 0437295 discloses the method of measuring the length of the hoist by detecting supersonic waves reflected to the driving part or hoist by a supersonic wave sensor installed between the hoist and the driving part.

However, by the foregoing method, the hoist vibrates and the supersonic wave generator is not consistent with a receiver or the supersonic wave sensor itself may be affected by disturbance, which is less reliable.

Also, an expensive supersonic wave sensor should be installed and manufacturing costs for equipment increase.

[Disclosure]

[Technical Problem]

The present invention has been made to solve the problems and it is an object of the present invention to provide a hoist length measuring method which measures the length of a hoist in a reliable manner, and accurately in real-time without any expensive equipment.

[Technical Solution]

In order to achieve the object of the present invention, a hoist length measuring method for input shaping comprises a first step of setting a hoist length L to an initial length (L0 + L1); a second step of determining whether a preset time period has elapsed after the operation of a hoist has started; a third step of determining whether a hook is falling or rising if it is determined that the preset time period has elapsed; and a fourth step of calculating a hoist length at the time of determination using the following respective equations for a case in which the hook is falling and for a case in which the hook is rising.

L0 represents the distance between the center of the hook and the center of the shaft of the motor of the hoist when the hook of the hoist is located at an upper limit, and L1 represents the distance between the center of the hook and the center of an object hanging on the hook, and the equation for the case in which the hook is rising is L = L - ΔL, and the equation for the case in which the hook is falling is L = L + ΔL, wherein ΔL represents the variation in the length of the hoist caused by the rising or falling of the hook, and is defined by a rising speed (or a falling speed) × a preset time period.

Preferably, the method further comprises determining whether the hook reaches the upper limit, and if so, setting the hoist length to the initial length if the hook is rising at the third step.

Preferably, the method further comprises determining whether the hook reaches the upper limit, and if not, performing the fourth step if the hook is rising at the third step.

Preferably, the method further comprises calculating the hoist length when the hook is rising at the fourth step, setting the calculated hoist length if the calculated hoist length is longer than the initial length, and setting the hoist length to the initial length if the calculated hoist length is shorter than the initial length.

[Advantageous Effect]

As described above, a hoist length measuring method for input shaping according to the present invention measures a length of a hoist in a reliable manner, and accurately in real-time without any expensive equipment.

[Brief Description of Drawings]

FIG. 1 illustrates an input shaping.
FIG. 2 is a perspective view of a crane to which a length measuring method according to the present invention applies.
FIG. 3 illustrates a structure of the crane in FIG. 2 to describe the length measuring method according to the present invention.
FIG. 4 is a flowchart which describes the hoist length measuring method according to the present invention.

[Best Mode]

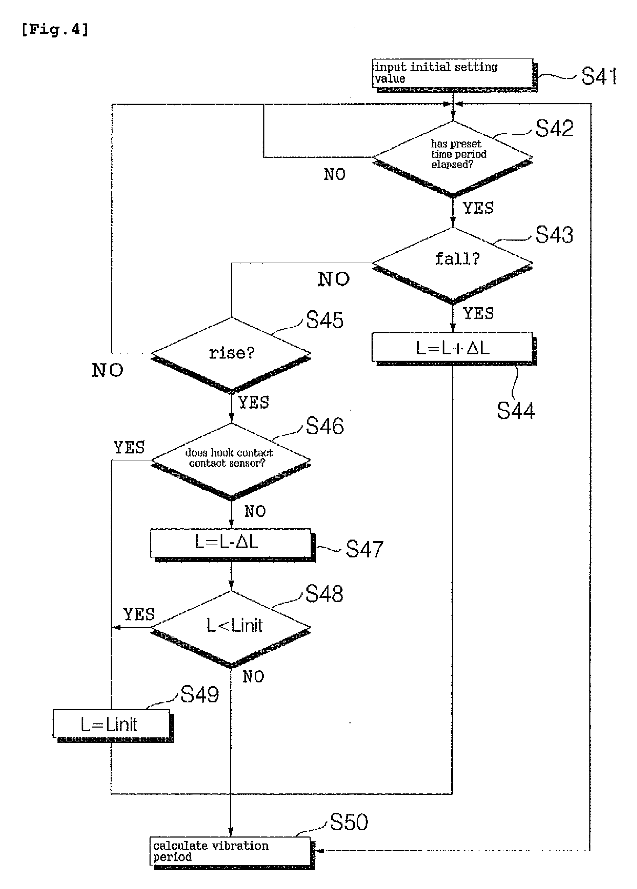

Hereinafter, a hoist length measuring method for input shaping according to an exemplary embodiment of the present invention will be described with reference to accompanying drawings.
FIG. 2 is a perspective view of a crane to which the length measuring method according to the present invention applies.
Referring to FIG. 2, a horizontal moving unit 100, a vertical moving unit 200 and a controller 300 are coupled to form a single body and mounted on a rail (not shown) to travel therealong,
**[0027]** A first end of a rope 250 is connected to a shaft of a motor 210 of the vertical moving unit 200, and a second end thereof is connected to the controller 400, and a hook 400 is mounted in the middle of the rope 250 to grip an object. The hook 400 rises or falls as the rope 250 is wound by a rotation of the motor 210.
A support 220 which is fixed to the vertical moving unit 200 at a first end extends to the rope 250, and a contact sensor 230 is installed in another surface. The hook 400 rises and contacts the contact sensor 230 at the maximum height as will be described later.
A switch box 320 which is shaped like a pendant is connected to the controller 300, and has a manipulation button installed therein for up, down, and stop operations.

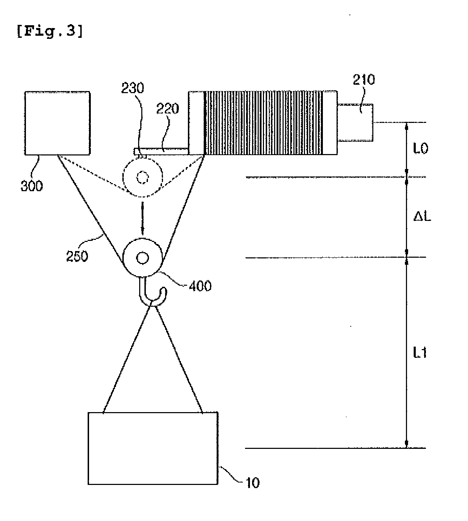

FIG. 3 illustrates a structure of the crane in FIG. 2 to describe the length measuring method according to the present invention.
Referring to FIG. 3, L0 refers to the state when the hook 400 is located at an upper limit, i.e., the distance between the center of the hook 400 and a center of a shaft of the motor 210 of the vertical moving unit 200 while the hook 400 is in contact with the contact sensor 230.
L1 refers to the distance between the center of the hook 400 and a center of an object 10 hanging on the hook 400.
Accordingly, the length of the hoist is L = L0 + L1 + $\Delta$L = Linit + $\Delta$L, wherein Linit refers to the initial length, $\Delta$L refers to the variation in the length of the hoist caused by the rising or falling of the hook 400, and is defined by a rising speed (or a falling speed) x a preset time period.
Hereinafter, the length measuring method according to the present invention will be described with reference to FIGS. 2 to 4. FIG. 4 is a flowchart which describes the hoist length measuring method according to the present invention. For purposes of convenience, the hook 400 is initially located at an upper limit, and falls to pick up and move the object.
First, an initial setting value is input (S41). That is, the rising or falling speed of the object (or rising or falling speed of the hook) may vary by the type of the driven crane, and the lengths L0 and L1 may vary in relation to the structure. Accordingly, as the initial setting value, the rising and falling speeds of the object, preset time period, the distance L1 between the hook and the object and the distance L0 between the upper limit of the hook and the shaft of the motor are input.
The preset time period refers to a sampling time period which is set for extracting the variation in the length of the hoist, and the input initial setting value is stored in a memory of the controller 400. The initial setting value may be changed at any time by a manipulator.
Then, whether the preset time period has elapsed is determined (S42). For example, the preset time period may be set as 30ms. If the preset time period has not elapsed, the lapse of the preset time period is checked continuously.
At operation S42, if it is determined that the preset time period has elapsed, it is determined whether the hook 400 is falling (S43). To do the foregoing, it is checked whether the manipulator has pushed the down button from the switch box 320. If the push signal from the down button is detected, it is determined that the hook 400 is falling.
At operation S44, the hoist length L at the current timing is calculated (S45). More specifically, the host length L is calculated by the equation L = L + $\Delta$L, wherein $\Delta$L is calculated by multiplying the falling speed of the hook 400 by the preset time period.
At operation S50, the number of inherent vibrations is calculated on the basis of the calculated hoist length L, and then the vibration period is calculated based on the calculated number of inherent vibrations. The crane is controlled by applying the vibration of an opposite phase having the foregoing vibration period.
[Amendment under Article 91 of the Rule as of June 3, 2010]

$$T = \frac{2\pi}{\omega_n}$$

[Amendment under Article 91 of the Rule as of June 3, 2010]

$$\omega_n = \sqrt{\frac{g}{l}}$$

T refers to the vibration period, $\omega_n$ refers to the number of inherent vibrations of the hoist, g refers to the gravitational acceleration, and $\ell$ refers to the length of the hoist calculated at operation S44.

With the repetition of operations S42 to S50 as above, if the hoist rises to the location where the object is provided and the manipulator takes off his/her finger from the down button and does not manipulate other buttons, a repetition loop of S42-S43-S44 and S42 is performed.

The manipulator hangs the object in the hook 400 of the hoist and pushes the up button.

As the up button is pushed, if it is determined that the hook 400 does not fall at operation S43, it is determined whether the hook 400 is rising at operation S45.

If it is determined that the hook 400 is rising at operation S45, it is determined whether the hook 400 contacts the contact sensor 230 (S46). That is, it is determined whether the hook 400 reaches the upper limit and cannot rise further. The foregoing determination may be made by receiving a detection signal from the contact sensor 230.

If it is determined that the hook 400 does not contact the contact sensor 230 at operation S46, the hoist length L at the current sampling timing is calculated (S47). More specifically, the hoist length L is calculated by the equation L = L - $\Delta$L, wherein $\Delta$L is calculated by multiplying the rising speed of the hook 400 by the preset time period.

Whether the current hoist length L is shorter than the initial length Linit is determined at operation S48, If it is determined that the current hoist length L is longer than the initial length Linit, at operation S50, the number of inherent vibrations is calculated based on the calculated hoist length L, and the vibration period is calculated based on the calculated number of inherent vibrations. Then, the crane is controlled by applying the vibration of the opposite phase having the foregoing vibration period.

In the case where the hook 400 is determined to have contacted the contact sensor 230 and where the current hoist length L is determined to be shorter than the initial length Linit at operation S48, the hoist length L is set as the initial length Linit at operation S49, based on which the vibration period is calculated and the crane is controlled at operation S50.

Although a few exemplary embodiments have been shown and described, it will be appreciated by those skilled in the art that changes may be made in these exemplary embodiments without departing from the principles and spirit of the invention, the range of which is defined in the appended claims and their equivalents.

**Claims**

1. A hoist length measuring method for input shaping, the method comprising: a first step of setting a hoist length L to an initial length (L0 + L1)(L0 represents the distance between the center of the hook and the center of the shaft of the motor of the hoist when the hook of the hoist is located at an upper limit, and L1 represents the distance between the center of the hook and the center of an object hanging on the hook); a second step of determining whether a preset time period has elapsed after the operation of a hoist has started; a third step of determining whether a hook is falling or rising if it is determined that the preset time period has elapsed; and a fourth step of calculating a hoist length at the time of determination using the following respective equations for a case in which the hook is falling and for a case in which the hook is rising, and the equation for the case in which the hook is rising is L = L - $\Delta$L, and the equation for the case in which the hook is falling is L = L + $\Delta$L ($\Delta$L represents the variation in the length of the hoist caused by the rising or falling of the hook, and is defined by a rising speed (or a falling speed) $\times$ a preset time period).

2. The method according to claim 1, further comprising determining whether the hook reaches the upper limit, and if so, setting the hoist length to the initial length if the hook is rising at the third step.

3. The method according to claim 1, further comprising determining whether the hook reaches the upper limit, and if not, performing the fourth step if the hook is rising at the third step.

4. The method according to claim 1, further comprising calculating the hoist length when the hook is rising at the fourth step, setting the calculated hoist length if the calculated hoist length is longer than the initial length, and setting the hoist length to the initial length if the calculated hoist length is shorter than the initial length.

[Fig.1]

[Fig.2]

[Fig.3]

[Fig.4]

**REFERENCES CITED IN THE DESCRIPTION**

**Patent documents cited in the description**

- US 4997095 A
- US 5638267 A

- KR 0437295